(19) Europäisches Patentamt
European Patent Office
Office européen des brevets

(11) **EP 1 749 591 B1**

(12) **FASCICULE DE BREVET EUROPEEN**

(45) Date de publication et mention
de la délivrance du brevet:
**27.08.2008 Bulletin 2008/35**

(51) Int Cl.:
**B21D 5/00** *(2006.01)* **F16F 1/18** *(2006.01)*
**B23Q 23/00** *(2006.01)*

(21) Numéro de dépôt: **06117100.5**

(22) Date de dépôt: **13.07.2006**

(54) **Dispositif de liaison à deformabilité sensiblement mono directionnelle**

Verbindungsanordnung mit im Wesentlichen unidirektionaler Verformbarkeit

Connecting device with substantially unidirectional deformability

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.07.2005 FR 0508059**

(43) Date de publication de la demande:
**07.02.2007 Bulletin 2007/06**

(73) Titulaire: **AMADA EUROPE**
**95912 Roissy CDG Cedex (FR)**

(72) Inventeur: **Hansen, Bjarne**
**72510 Pontvallain (FR)**

(74) Mandataire: **Dronne, Guy et al**
**Cabinet Beau de Loménie**
**158, rue de l'Université**
**75340 Paris Cédex 07 (FR)**

(56) Documents cités:
**EP-A- 0 919 301 EP-A2- 0 384 947**
**DE-A1- 10 141 432 US-A- 2 116 907**

• **PATENT ABSTRACTS OF JAPAN vol. 006, no. 071 (M-126), 6 mai 1982 (1982-05-06) -& JP 57 011730 A (KOMATSU LTD), 21 janvier 1982 (1982-01-21)**

## Description

La présente invention a pour objet un dispositif de liaison à déformabilité sensiblement mono directionnelle entre deux pièces.

En d'autres termes, la présente invention concerne un dispositif pour compenser les tolérances de fabrication et les défauts d'alignement dans un assemblage mécanique rigide mobile ou non. Le dispositif de liaison permet de maintenir l'assemblage rigide suivant des axes où cette rigidité est nécessaire alors que dans une direction privilégiée, il permet par sa flexibilité de limiter les efforts sur tous les composants faisant partie de l'assemblage suivant la direction où une rigidité inférieure est permise. Un tel dispositif est particulièrement utile dans des mécanismes à déplacements cartésiens selon des axes orthogonaux dans l'espace XRZ constitué de guidages mécaniques multiples et parallèles et incluant des structures rigides.

La fonction remplie par un tel dispositif est habituellement réalisée au moyen d'un guidage linéaire mécanique constitué par exemple par des patins à cage à billes sur profil de guidage, des douilles à billes sur axe ou par glissement de surfaces lubrifiées en contact selon des pistes de guidage usinées.

Une autre solution est de réaliser les mécanismes et montages mécaniques assurant un alignement très précis selon des directions parallèles ou perpendiculaires des axes des mouvements pour éviter l'introduction de contraintes inadmissibles pour ces mécanismes.

Ces deux types de solution sont relativement onéreux.

Un objet de la présente invention est de fournir un dispositif de liaison entre deux pièces qui permette une adaptation des tolérances selon une direction privilégiée alors que cette adaptation est sensiblement exclue dans les autres directions du repère cartésien.

Pour atteindre ce but selon l'invention, le dispositif de liaison à déformabilité sensiblement mono directionnelle entre deux pièces comprend :

- deux plaques élastiquement déformables sensiblement identiques, planes et d'épaisseur sensiblement constante dans leur partie déformable, chaque plaque présentant deux extrémités opposées et étant flexible selon une direction sensiblement orthogonale à ladite plaque et sensiblement rigide selon les autres directions, et
- deux éléments rigides formant entretoise pour relier entre elles les extrémités correspondantes des deux plaques en formant un encastrement et pour les maintenir, au repos, sensiblement parallèles, aucune autre liaison mécanique n'existant entre les deux plaques ; et des moyens de fixation des pièces comprenant deux organes rigides d'interface respectivement fixés dans la zone centrale de chaque plaque ;

par quoi les deux pièces peuvent avoir un déplacement relatif significatif selon la direction orthogonale aux deux plaques et des déplacements relatifs très limités selon les deux autres directions d'un repère cartésien.

On comprend que grâce à la déformabilité par flexion des deux plaques selon une direction orthogonale aux plaques, des mouvements relatifs des deux pièces dans cette direction sont possibles. En revanche, grâce à l'encastrement des extrémités des deux plaques parallèles, grâce aux deux éléments formant entretoise et au mode de liaison des extrémités des plaques avec les éléments d'entretoise, les possibilités de déformation selon les deux directions cartésiennes contenues dans ces plaques sont sensiblement impossibles en raison de la rigidité du système selon ces deux directions.

Par l'expression "élément formant entretoise", il faut entendre soit des entretoises constituées par une pièce distincte des plaques, soit des reliefs prévus aux extrémités de plaques.

De préférence les plaques sont planes et, de préférence encore, ces plaques sont sensiblement rectangulaires.

De préférence encore, les éléments d'entretoisement relient les petits côtés correspondant des deux plaques lorsque celles-ci sont rectangulaires et, de préférence encore, les éléments d'entretoisement s'étendent sur toute la longueur des petits côtés.

Selon un mode préféré de réalisation, chaque élément d'entretoisement est constitué par une bande d'un matériau rigide interposée entre les deux plaques selon leurs petits côtés et les bandes de matériau sont fixées sur les plaques par rivetage, boulonnage ou soudage.

Chaque plaque comporte dans la zone centrale de sa face externe, des moyens de fixation d'une desdites pièces, les moyens de fixation des pièces comprenant deux organes rigides dInterface respectivement fixés dans la zone centrale de chaque plaque.

Un autre objet de l'invention est de fournir un dispositif de positionnement de la butée arrière d'une presse plieuse utilisant des dispositifs de liaison du type défini précédemment.

Pour atteindre ce but, le dispositif de positionnement de la butée arrière d'une presse plieuse comprenant deux flasques latéraux fixes et un support mobile de ladite butée comprend deux rails de guidage solidaires desdits flasques parallèles à une direction XX', deux deuxièmes rails de guidage solidaires de chaque côté dudit support et parallèles à une direction RR' orthogonale à la direction XX', deux ensembles moteurs d'entraînement, chaque ensemble étant interposé entre un premier rail de guidage et un deuxième rail de guidage, chaque ensemble comprenant un premier organe moteur pour déplacer ledit ensemble de liaison par rapport au premier rail et un deuxième organe moteur pour déplacer ledit deuxième rail par rapport audit ensemble; chaque ensemble moteur d'entraînement comprend un dispositif de liaison du type défini ci-dessus interposé entre lesdits premier et deuxième organes moteurs de telle manière que lesdites plaques du dispositif de liaison soient parallèles aux plans définis par les directions XX' et RR'.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :

- la figure 1A est une vue en élévation du dispositif de liaison sous une forme simplifiée ;
- la figure 1B est une vue de côté du dispositif de liaison de la figure 1A ;
- la figure 1C est une vue de dessus du dispositif de liaison de la figure 1 ;
- la figure 2 est une vue en perspective du dispositif de liaison de la figure 1A ;
- la figure 3 est une vue en perspective du dispositif de liaison soumise à des contraintes selon la direction Z ;
- la figure 4A est une vue en élévation d'un premier mode préféré de réalisation du dispositif de liaison conforme à l'invention ;
- la figure 4B est une vue de côté du dispositif de liaison de la figure 4A ;
- la figure 5 est une vue en perspective du dispositif de liaison de la figure 4A ;
- la figure 6 est une vue en perspective d'un deuxième mode préféré de réalisation du dispositif conforme à l'invention ; et
- la figure 7 est une demi-vue d'un dispositif de positionnement d'une butée arrière pour presse plieuse utilisant un dispositif de liaison du type représenté sur les figures 1 à 6.

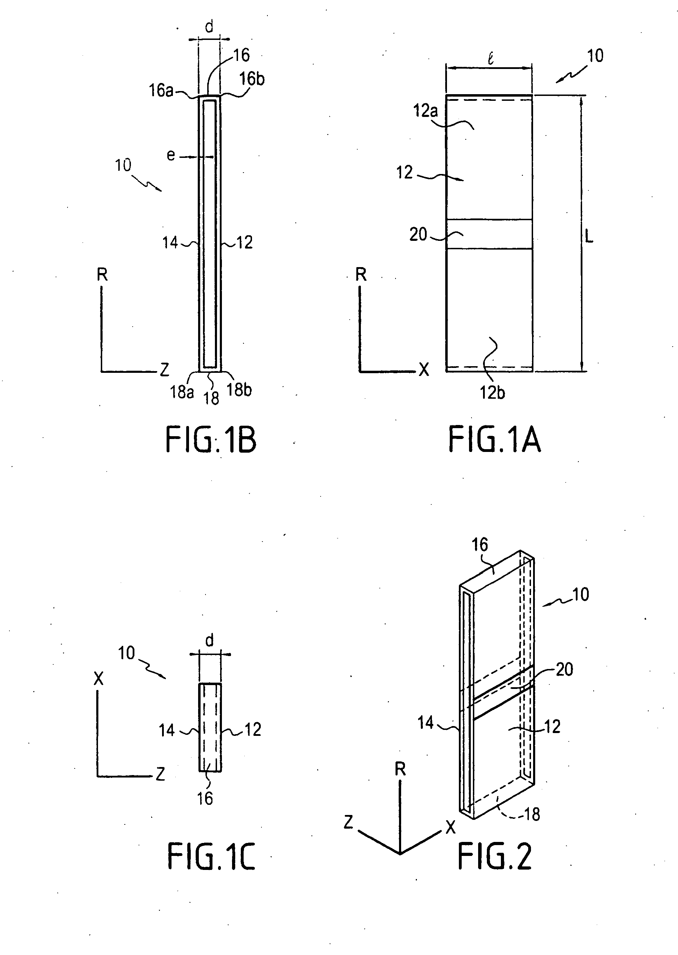

En se référant tout d'abord aux figures 1 et 2, on va décrire le principe de réalisation du dispositif de liaison. Celui-ci est constitué par deux plaques 12 et 14 qui sont, dans le mode de réalisation considéré, rectangulaires et identiques. Ces plaques présentent une longueur L selon la direction R du repère cartésien et une largeur I selon la direction X du repère cartésien. Les deux plaques 12 et 14 sont raccordées entre elles à leurs extrémités 12a 14a 12b 14b par des éléments formant entretoise 16 et 18, qui s'étendent selon la direction Z, pour maintenir parallèles les plaques 12 et 14 lorsqu'elles sont au repos. Ces éléments d'entretoise sont identiques et leurs bords respectifs 16a 16b et 18a 18b sont encastrés sur les extrémités des plaques 12 et 14. Les plaques 12 et 14 comportent une partie centrale 22 constituant une zone de fixation des deux pièces entre lesquelles doit être monté le dispositif de liaison 10.

Les plaques 12 et 14 et les éléments d'entretoise 16 et 18 sont réalisés de préférence à l'aide d'un même matériau, par exemple un métal. Les plaques 12 et 14 ont de préférence une épaisseur sensiblement constante e et l'écartement entre les deux plaques 12 et 14 maintenues au repos par les entretoises 16 et 18 est repéré d. Chaque plaque 12, 14 a des dimensions qui lui confèrent une certaine flexibilité selon la direction de l'axe cartésien Z et une rigidité importante selon les autres directions.

Dans un mode particulier de réalisation, les plaques sont réalisées avec un acier ayant une limite élastique de 355 MPa. Pour chaque plaque L = 300 mm ; l = 80 mm et e = 4 mm. La distance d entre les deux plaques au repos est de 2 à 4 mm.

Plus généralement pour obtenir un fonctionnement optimal du dispositif de liaison, il est souhaitable de respecter les relations dimensionnelles suivantes :

$$80e \leq L \leq 100e$$

$$15e \leq l \leq 40e$$

$$0,5e \leq d \leq 2 \cdot 2e$$

Enfin, si l'on appelle H la hauteur des plaques subissant effectivement une flexion compte tenu des encastrements d'extrémité, il est souhaitable d'avoir la relation suivante

$$15e \leq H \leq 35e$$

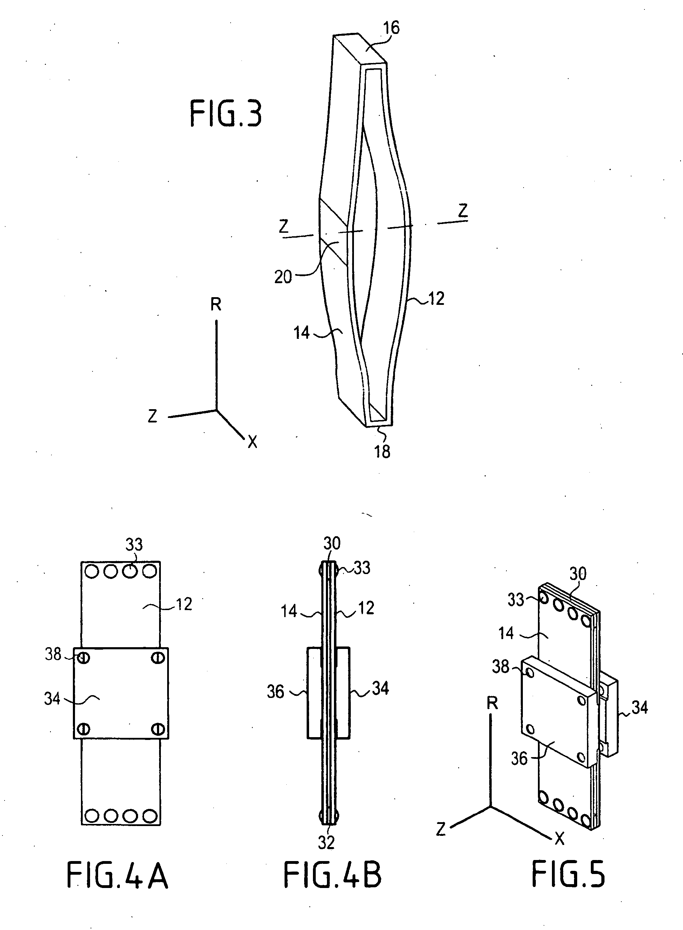

Comme le montre mieux la figure 3, lorsque des contraintes selon la direction Z sont appliquées par les pièces fixées sur les plaques 12 et 14, celles-ci peuvent se déformer selon la direction Z, autorisant ainsi un déplacement relatif des deux pièces selon la direction Z. En revanche, on comprend que par sa rigidité résultant des dimensions et des éléments d'entretoise 16 et 18 et des dimensions des plaques, les déplacements selon les directions cartésiennes X et R sont sensiblement impossibles en raison de la rigidité du dispositif de liaison 10 selon ces directions.

Selon un mode particulier de réalisation, chaque plaque présente une déformabilité de $\pm 1,5$ mm selon la direction Z et une rigidité selon les deux autres directions correspondant à une déformation au maximum égale à 0,1 mm sous une charge de 150 kg.

On obtient donc bien, par une construction très simple, un dispositif de liaison à déformabilité sensiblement mono directionnelle selon la direction cartésienne Z. En revanche, les possibilités de déformation selon les deux autres directions cartésiennes RX sont très limitées.

En se référant maintenant aux figures 4 et 5, on va décrire plus en détail un premier mode préféré de réalisation du dispositif de liaison. Dans ce mode de réalisation, les éléments d'entretoisement 16 et 18 sont constitués par des bandes d'un matériau de préférence identique à celui des plaques 12 et 14 référencées 30 et 32 ; ces bandes de matériau maintiennent un écartement constant au repos entre les plaques 12 et 14. Dans ce mode de réalisation les bandes 30 et 32 formant les éléments d'entretoise sont rivetées par des rivets tel que 34. Il va cependant de soi que d'autres modes de liaison de solidarisation des éléments d'entretoise et des plaques pourraient être utilisés, tels que le soudage ou le collage dès lors que ces techniques permettent une force de liaison suffisante compte tenu des contraintes qui seront appliquées au dispositif de liaison 10. Sur ces figures, on a représenté également des pièces d'interface 34 et 36 qui sont fixées sur les parties centrales des plaques 12 et 14 pour permettre une fixation aisée des pièces mécaniques entre lesquelles doit être interposé le dispositif de liaison. Les pièces d'interface 34 et 36 sont par exemple rectangulaires et fixées sur les plaques par collage ou par toute autre technique convenable. De préférence les pièces d'interface 34 et 36 constituent chacune une sorte de bride avec des trous de fixation tel que 38 pour la fixation des deux pièces associées au dispositif de liaison.

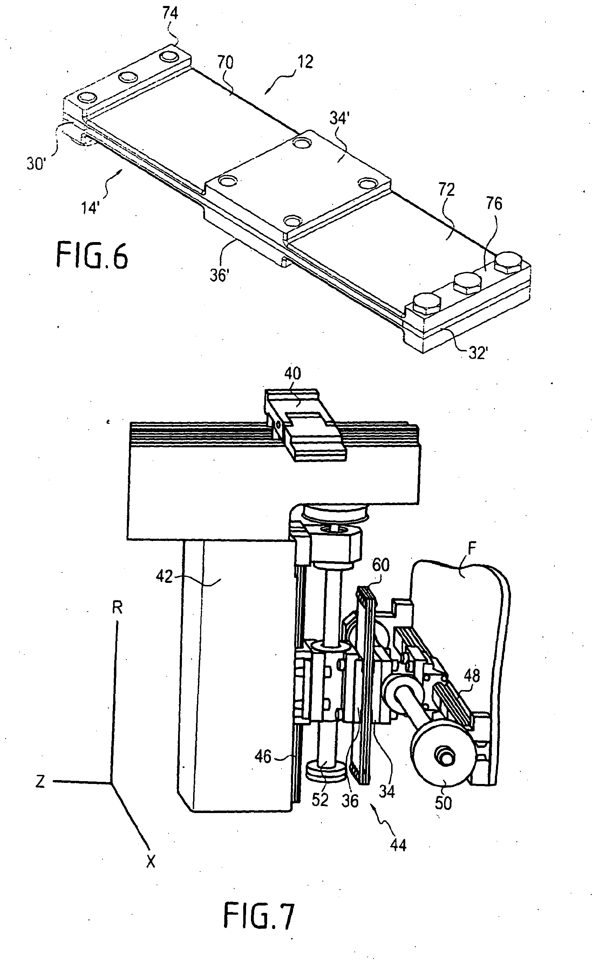

Sur la figure 6, on a représenté un deuxième mode préféré de réalisation du dispositif de liaison.

Chaque plaque 12', 14' est usinée dans une plaque plus épaisse pour ramener les parties courantes 70, 72 de chaque plaque à l'épaisseur e souhaitée et pour laisser subsister en surépaisseur une partie centrale 34', 36' constituant les pièces d'interfaces et des parties d'extrémité 74 et 76 au niveau des encastrements avec les éléments d'entretoise 30° et 32°. Les éléments d'entretoises 30' et 32' sont, de préférence, rendues solidaires des extrémités des plaques, au niveau des surépaisseurs 74 et 76 par des vis telles que 33'. On obtient ainsi un très bon encastrement des extrémités des plaques 12' et 14' sur les éléments d'entretoise 30' et 32'.

Le dispositif de liaison représenté sur la figure 6 vérifie bien sûr, de préférence les relations géométriques énoncées précédemment.

Sur la figure 7, on a représenté en perspective un exemple d'utilisation du dispositif de liaison représenté sur les figures 1 à 5, dans le cas du positionnement de la butée arrière d'une presse plieuse.

La fonction de la butée arrière d'une presse plieuse est d'assurer un positionnement rigoureux du bord d'une tôle qui doit être usinée par la presse-plieuse. Les butées arrières telles que 40 sont montées sur un support 42 qui est guidé en translation selon les directions cartésiennes R et X par rapport aux flasques F du bâti. Pour cela, un ensemble moteur d'entraînement 44 est prévu à chaque extrémité du support 42, de la butée arrière 40 entre chaque côté de celle-ci et les flasques F du bâti de la machine. Par leur construction, le support 42 et les flasques F sont très rigides. Plus précisément, sur les côtés du support 42, sont montés deux rails de guidage tel que 46 s'étendant selon la direction R et deux rails de guidage 48 sont fixés sur chaque flasque F selon la direction X. Des organes de déplacement 50 permettent de déplacer l'ensemble de liaison 44 par rapport au rail 48 selon la direction X et des deuxièmes organes de déplacement 52 permettent de déplacer le support 42 de la butée arrière 40 selon la direction R par rapport à l'ensemble de liaison 44. Ainsi, le support 42 de butée arrière 40 peut être déplacé par rapport au bâti de la machine selon les directions R et X.

Pour compenser les éventuelles insuffisances de tolérance des moyens de guidage constitués par les rails 46 et 48, un dispositif de liaison 60, du type décrit en liaison avec les figures 1 à 5, est interposé entre les organes de déplacement 50 et 52. Le dispositif 60 est monté de telle manière que les plaques 12 et 14 qui le constituent s'étendent selon le plan RX. Leurs pièces d'interface 34 et 36 servent à fixer respectivement les organes moteurs 50 et 52.

On comprend qu'ainsi, grâce aux possibilités de déformation du dispositif de liaison 60, les erreurs de tolérance dans les moyens de guidage selon les directions RX peuvent être compensées par déformation du dispositif de liaison dans la direction Z. En revanche, l'ensemble du système interposé entre les rails de guidage 46 et 48 présente une grande rigidité selon les directions RX.

## Revendications

**1.** Dispositif de liaison à déformabilité sensiblement mono directionnelle entre deux pièces, comprenant:

- deux plaques (12,14) elastiquement déformables sensiblement identiques, planes et d'épaisseur sensiblement constante dans leur partie déformable, chaque plaque présentant deux extrémités opposées et étant flexible selon une direction sensiblement orthogonale à ladite plaque et sensiblement rigide selon les autres directions, et
- deux éléments rigides (16,18) formant entretoise pour relier entre elles les extrémités correspondantes des deux plaques en formant un encastrement et pour les maintenir, au repos, sensiblement parallèles, aucune autre liaison mécanique n'existant entre les deux plaques ; et des moyens de fixation des pièces comprenant deux organes rigides d'interface (34,36) respectivement fixés dans la zone centrale de la face externe de chaque plaque ;

par quoi les deux pièces peuvent avoir un déplacement relatif significatif selon la direction orthogonale aux deux plaques et des déplacements relatifs très limités selon les deux autres directions d'un repère cartésien.

**2.** Dispositif de liaison selon la revendication 1, **carac-**

**térisé en ce que** les éléments d'entretoisement (16,18) s'étendent sur toute la longueur des extrémités desdites plaques (12,14).

3. Dispositif de liaison selon l'une quelconque des revendications 1 et 2, **caractérisé en ce que** lesdites plaques (12, 14) sont sensiblement rectangulaires.

4. Dispositif de liaison selon la revendication 3, **caractérisé en ce que** les éléments d'entretoisement (16,18) relient les petits côtés correspondants des deux plaques.

5. Dispositif de liaison selon la revendication 4, **caractérisé en ce que** lesdits éléments d'entretoisement (16, 18) s'étendent sur toute la longueur des petits côtés.

6. Dispositif de liaison selon l'une quelconque des revendications 3 à 5, **caractérisé en ce que** chaque élément formant entretoise (16,18) est constitué par une bande d'un matériau rigide interposée entre les deux plaques selon leurs petits côtés et **en ce que** les bandes de matériau sont fixées sur les plaques par rivetage.

7. Dispositif selon l'une quelconque des revendications 1 à 6, **caractérisé en ce que** la longueur totale de chaque plaque L est comprise entre 80e et 100e, e étant l'épaisseur d'une plaque.

8. Dispositif selon l'une quelconque des revendications 1 à 7, **caractérisé en ce que** la largeur l d'une plaque est comprise entre 15e et 40e, e étant l'épaisseur de la plaque.

9. Dispositif de positionnement de la butée arrière (40) d'une presse plieuse comprenant deux flasques latéraux (F) fixes et un support mobile (42) de ladite butée (40), ledit dispositif comprenant deux rails de guidage (48) solidaires desdits flasques parallèles à une direction XX',

deux deuxièmes rails de guidage (46) solidaires de chaque côté dudit support (42) et parallèles à une direction RR' orthogonale à la direction XX', deux ensembles moteurs d'entraînement (44), chaque ensemble (44) étant interposé entre un premier rail de guidage (48) et un deuxième rail de guidage (46), chaque ensemble (44) comprenant un premier organe moteur (50) pour déplacer ledit ensemble par rapport au premier rail (48) et un deuxième organe moteur (52) pour déplacer ledit deuxième rail (46) par rapport audit ensemble (44), chaque ensemble (44) comprenant un dispositif de liaison selon l'une quelconque des revendications 1 à 8 interposé entre lesdits premier et deuxième organes moteurs (50,52) de telle manière que lesdites plaques du dispositif de liaison soient parallèles aux plans définis par les directions XX' et RR'.

**Claims**

1. A link device for connecting two parts together and that is deformable in substantially one direction only, the device comprising:

· two plane, substantially identical elastically deformable plates (12, 14) of thickness that is substantially constant in their deformable portions, each plate presenting two opposite ends and being flexible in a direction that is substantially orthogonal to said plate and substantially rigid in the other directions; and
· two rigid spacer-forming elements (16, 18) for interconnecting the corresponding ends of the two plates while providing rigid end restraint and for holding them substantially parallel while at rest, no other mechanical link existing between the two plates; and fastener means for fastening to the parts comprising two rigid interface members (34, 36) fastened respectively in the middle zone of the outside face of each plate;

whereby the two parts can move relative to each other significantly in the direction orthogonal to the two plates, while relative movements between them are very limited in the other two directions of a Cartesian frame of reference.

2. A link device according to claim 1, **characterised in that** the spacer elements (16, 18) extend over the entire lengths of the ends of said plates (12, 14).

3. A link device according to claim 1 or claim 2, **characterised in that** said plates (12, 14) are substantially rectangular.

4. A link device according to claim 3, **characterised in that** the spacer elements (16, 18) interconnect the corresponding short sides of the two plates.

5. A link device according to claim 4, **characterised in that** said spacer elements (16, 18) extend over the full length of said short sides.

6. A link device according to any one of claims 3 to 5, **characterised in that** each spacer-forming element (16, 18) is constituted by a strip of rigid material interposed between the two plates along their short sides, and **in that** the strips of material are fastened to the plates by riveting.

7. A device according to any one of claims 1 to 6, **char-**

**acterised in that** the total length of each plate L lies in the range 80e to 100e, where $\underline{e}$ is the thickness of a plate.

8. A device according to any one of claims 1 to 7, **characterised in that** the width $\ell$ of a plate lies in the range 15e to 40e, where $\underline{e}$ is the thickness of the plate.

9. A device for positioning the rear abutment (40) of a press brake having two stationary cheek plates (F) and a moving support (42) for said abutment (40), said device comprising two guide rails (48) secured to said cheek plates parallel to a direction XX',

    two second guide rails (46) secured to each side of said support (42) and parallel to a direction RR' orthogonal to the direction XX', two drive motor assemblies (44), each assembly (44) being interposed between a first guide rail (48) and a second guide rail (46), each assembly (44) comprising a first drive member (50) for moving said assembly relative to the first rail (48) and a second drive member (52) for moving said second rail (46) relative to said assembly (44), each assembly (44) comprising a link device according to any one of claims 1 to 8 interposed between said first and second drive members (50, 52) in such a manner that said plates of the link device are parallel to the planes defined by the directions XX' and RR'.


**Patentansprüche**

1. Verbindungsvorrichtung mit im wesentlichen monodirektionaler Verformbarkeit zwischen zwei Teilen, umfassend:

    - zwei elastisch verformbare Platten (12, 14), die im wesentlich identisch und eben sind und in ihrem verformbaren Teil eine im wesentlichen konstante Dikke aufweisen, wobei jede Platte zwei gegenüberliegende Enden aufweist und in einer zu der Platte im wesentlichen orthogonalen Richtung flexibel und in den anderen Richtungen im wesentlichen starr ist, sowie
    - zwei starre Strebenelemente (16, 18), um die entsprechenden Enden der zwei Platten unter Bildung einer Einbindung miteinander zu verbinden und um sie im Ruhezustand im wesentlichen parallel zu halten, wobei zwischen den zwei Platten keine weitere mechanische Verbindung vorhanden ist; sowie Mittel zum Befestigen der Teile, die zwei starre Übergangsflächenelemente (34, 36) umfassen, die jeweils im mittleren Bereich der Außenseite jeder Platte befestigt sind,

wodurch die zwei Teile in der zu den zwei Platten orthogonalen Richtung eine signifikante Relativbewegung und in den zwei anderen Richtungen eines kartesischen Koordinatensystems sehr begrenzte Relativbewegungen aufweisen können.

2. Verbindungsvorrichtung nach Anspruch 1, **dadurch gekennzeichnet, daß** die Verstrebungselemente (16, 18) sich über die gesamte Länge der Enden der Platten (12, 14) erstrecken.

3. Verbindungsvorrichtung nach einem der Ansprüche 1 und 2, **dadurch gekennzeichnet, daß** die Platten (12, 14) im wesentlichen rechteckig sind.

4. Verbindungsvorrichtung nach Anspruch 3, **dadurch gekennzeichnet, daß** die Verstrebungselemente (16, 18) die entsprechenden Schmalseiten der zwei Platten verbinden.

5. Verbindungsvorrichtung nach Anspruch 4, **dadurch gekennzeichnet, daß** die Verstrebungselemente (16, 18) sich über die gesamte Länge der Schmalseiten erstrecken.

6. Verbindungsvorrichtung nach einem der Ansprüche 3 bis 5, **dadurch gekennzeichnet, daß** jedes Strebenelement (16, 18) von einem zwischen den zwei Platten entlang ihrer Schmalseiten eingefügten Streifen aus einem starren Material gebildet ist und daß die Materialstreifen an den Platten festgenietet sind.

7. Vorrichtung nach einem der Ansprüche 1 bis 6, **dadurch gekennzeichnet, daß** die Gesamtlänge L jeder Platte zwischen 80e und 100e beträgt, wobei e die Dicke einer Platte ist.

8. Vorrichtung nach einem der Ansprüche 1 bis 7, **dadurch gekennzeichnet, daß** die Breite I einer Platte zwischen 15e und 40e beträgt, wobei e die Dicke der Platte ist.

9. Vorrichtung zum Positionieren des hinteren Anschlags (40) einer Biegepresse mit zwei festen Seitenflanschen (F) und einem beweglichen Träger (42) des Anschlags (40), wobei die Vorrichtung zwei mit den Flanschen fest verbundene, zu einer Richtung XX' parallel verlaufende Führungsschienen (48), zwei zweite Führungsschienen (46), die mit jeder Seite des Trägers (42) fest verbunden sind und zu einer zur Richtung XX' orthogonalen Richtung RR' parallel verlaufen, zwei Antriebsmotoreinheiten (44) aufweist, wobei jede Einheit (44) zwischen einer ersten Führungsschiene (48) und einer zweiten Führungsschiene (46) angeordnet ist, wobei jede Einheit (44) ein erstes Antriebsorgan (50) zum Bewegen der Einheit gegenüber der ersten Schiene (48) sowie ein zweites Antriebsorgan (52) zum Bewegen der zweiten Schiene (46) gegenüber der Einheit (44) umfaßt, wobei jede Einheit (44) eine Verbindungsvorrichtung nach einem der Ansprüche 1 bis 8 aufweist, die zwischen dem ersten und dem zweiten Antriebsorgan (50, 52) derart eingefügt ist, daß die genannten Platten der Verbindungsvorrichtung zu den durch die Richtungen XX' und RR' definierten Ebenen parallel verlaufen.

FIG.1B

FIG.1A

FIG.1C

FIG.2

FIG.3

FIG.4A  FIG.4B  FIG.5

FIG.6

FIG.7